# FASCICULE DE BREVET EUROPEEN

(11) **EP 0 425 370 B1**
(45) Date de publication et mention de la délivrance du brevet: **13.04.1994**
(21) Numéro de dépôt: 90402987.3
(22) Date de dépôt: 24.10.1990
(51) Int. Cl.: B60P 7/13, B65D 90/00

(54) **Pièce intermédiare amovible de liaison et de manutention de boîtes sur véhicule et véhicule adapté**
Abnehmbares Zwischenstück für die Verbindung und Handhabung von Containern auf Fahrzeugen und entsprechendes Fahrzeug
Removable intermediate piece for connecting containers to, and handling containers on, vehicles, and a vehicle adapted for this

(30) Priorité: 24.10.1989 FR 8913940
(43) Date de publication de la demande: 02.05.1991
(73) Titulaire: SOCIETE NATIONALE DES CHEMINS DE FER FRANCAIS, F-75436 Paris Cedéx 09 (FR)
(72) Inventeur: Guigon, Marc, F-77360 Vaires-sur-Marne (FR); Vogt, Pierre, F-91370 Verrières-le-Buisson (FR); Anis, Alain, F-91340 Leuville-sur-Orge (FR)
(74) Mandataire: Casalonga, Axel

(56) Documents cités:
- DE-A- 3 538 892
- DE-U- 8 101 528
- US-A- 3 528 569
- US-A- 4 212 251

## Description

La présente invention est relative à une pièce intermédiaire amovible, destinée à être montée entre, d'une part, une boîte, telle qu'un conteneur maritime, un conteneur terrestre, une caisse mobile ou une superstructure à gabarit ferroviaire, c'est-à-dire un wagon classique dont on a enlevé les bogies et, d'autre part, la plateforme d'un véhicule, notamment d'un véhicule ferroviaire, tel qu'un wagon de marchandises ou d'un véhicule routier.

Jusqu'à présent, au cours des transports ferroviaires, les boîtes définies précédemment sont posées sur les plateformes des wagons et maintenues sur celles-ci pendant le transport par des chevilles qui, dans certains cas, peuvent être escamotées par basculement ou même retirées pour faciliter le transport de plusieurs formats de boîtes sur un même wagon. Le profil de ces chevilles est tel que la liaison entre la boîte et le wagon est suffisante pour répondre aux différentes sollicitations subies par la boîte pendant le déplacement du wagon.

On connaît également l'utilisation de glissières latérales placées à la surface de la plateforme du wagon, qui ne s'opposent pas à un mouvement dans le sens de la longueur du wagon. Des butées sont fixées aux extrémités au wagon et le chargement peut glisser entre ces butées. On installe des ranchers qui constituent des éléments de sécurité latéraux, pour s'opposer au renversement latéral éventuel de la boîte.

Pour procéder ensuite à la manutention de ces boîtes, lorsque le wagon est arrivé au chantier de chargement ou de déchargement, on saisit habituellement les boîtes à l'aide d'engins divers, tels que des portiques, des autogrues, etc... A cet effet, les conteneurs maritimes sont généralement saisis par les pièces de coin supérieures qu'ils comportent. Les conteneurs terrestres, au même titre que les caisses mobiles, peuvent être saisis par des zones de prise au moyen de pinces spécialement adaptées.

La manutention des boîtes se fait donc, d'une manière générale, soit au moyen d'un palonnier à verrous tournants, dans le cas de conteneurs maritimes, soit au moyen d'un palonnier muni de deux paires de pinces. Une telle manutention ne peut être que très difficilement automatisée, en raison des multiples problèmes dûs aux différents types de boîtes et aux différentes dimensions de ces boîtes pour un type déterminé. De plus, la manutention actuelle nécessite la présence d'un ou deux opérateurs, afin de guider convenablement l'engagement des appareils de préhension.

On connait par DE-A-3538892, une pièce intermédiaire amovible de liaison et de manutention de boîtes sur véhicule, comprenant une partie supérieure composée d'un bloc de liaison qui pénètre dans une pièce de coin d'un conteneur ou d'une plateforme de camion et qui est verrouillée par rotation. Cette pièce de liaison comporte également une partie inférieure composée d'une embase montée à demeure dans une pièce de coin. Les deux parties inférieure et supérieure sont reliées entre elles par un flasque qui non seulement supporte tout le poids du conteneur mais qui ne peut pas servir à la manutention de la boîte et être adapté au déverrouillage de la pièce intermédiaire.

La présente invention a donc pour objet un dispositif qui permet de faciliter les opérations de manutention des boîtes, cette manutention pouvant alors être plus facilement automatisée, et ce tout en assurant une excellente liaison des boîtes sur les véhicules pendant leur déplacement.

L'invention a pour objet une pièce intermédiaire amovible, capable de constituer un élément unique, toujours identique, pour la manutention des boîtes, quels que soient leur type ou leurs dimensions et qui permet d'assurer à la fois la liaison des boîtes sur le véhicule et la manutention de ces boîtes, par l'intermédiaire de ces pièces amovibles.

Telle que revendiquée, la pièce intermédiaire amovible de liaison et de manutention de boîtes sur véhicule, comprend une partie supérieure en saillie, adaptée pour coopérer avec un premier moyen de liaison faisant partie de la boîte, une partie inférieure, adaptée pour coopérer avec un deuxième moyen de liaison faisant partie du véhicule; selon l'invention cette pièce comporte une semelle plane horizontale, disposée entre les parties supérieure et inférieure, et adaptée pour coopérer par l'intermédiaire de sa face inférieure avec un organe de levage pour la manutention de la boîte, la face supérieure de la semelle se trouvant au même niveau que la plateforme du véhicule.

La partie supérieure en saillie peut comprendre une cheville verticale, dont le profil est adapté pour pénétrer dans un orifice pratiqué au voisinage de la bordure de la boîte.

La cheville peut être fixe ou au contraire montée en vue de sa rotation sur un quart de tour, afin d'assurer le verrouillage de la pièce intermédiaire sur la boîte.

La partie inférieure de la pièce intermédiaire comprend une protubérance faisant saillie vers le bas, capable de coopérer avec le véhicule, en vue du verrouillage de la pièce intermédiaire sur le véhicule. A cet effet, la protubérance en saillie vers le bas peut présenter un profil capable de coopérer, en vue du verrouillage de la pièce intermédiaire sur le véhicule, avec au moins une pièce mobile de verrouillage montée sur le véhicule.

Dans une variante, l'ensemble de la protubérance en saillie vers le bas peut tourner d'un quart de tour et présente un profil tel que la protubérance puisse, dans une position, traverser un orifice pratiqué au voisinage de la bordure du véhicule et àans une autre position, empêcher tout passage à travers ledit orifice, assurant ainsi le verrouillage de la pièce intermédiaire sur le véhicule.

Dans une autre variante, la protubérance en saillie vers le bas peut comporter au moins une pièce mobile de verrouillage, capable de coopérer avec une encoche pratiquée sur le véhicule.

La pièce mobile peut être montée sur la pièce intermédiaire d'une manière telle, qu'en l'absence de sollicitation, la pièce mobile revienne par son propre poids en position de verrouillage.

L'actionnement de la pièce de verrouillage peut être réalisé au moyen d'un organe d'actionnement relié à la ou les pièces mobiles de verrouillage et capable d'être poussé par un doigt a'actionnement monté sur l'organe de levage et de manutention ou par l'organe de levage lui-même.

Dans une variante, le doigt d'actionnement est remplacé par un organe en forme de fourche, qui vient agir sur deux pièces mobiles de verrouillage.

Tel que revendiqué, le véhicule de l'invention, notamment véhicule sur rails, tel que wagon de transport de marchandises, comporte une plateforme de réception de boîtes munie de dispositifs de liaison pour lesdites boîtes, et comprend sur la bordure de la plateforme une pluralité de boîtiers adaptés au passage et au logement des parties inférieures de pièces intermédiaires amovibles telles que définies précédemment, et les boîtiers sont placés de façon que la face supérieure des semelles des pièces intermédiaires soit au même niveau que la face supérieure de la plateforme. De cette manière, les boîtes peuvent reposer en cas de besoin, à la fois sur les semelles des pièces intermédiaires et sur la plateforme du véhicule.

Dans un mode de réalisation de l'invention, chaque boîtier comprend au moins une pièce mobile de verrouillage, capable de coopérer avec une encoche pratiquée sur la partie inférieure des pièces intermédiaires qui sont alors démunies de toute pièce mobile.

L'invention sera mieux comprise à l'étude de quelques modes de réalisation décrits à titre d'exemples nullement limitatifs et illustrés par les dessins annexés, sur lesquels :
la figure 1 est une vue partielle schématique en élévation d'une plateforme de wagon de chemin de fer, supportant un conteneur maritime:
la figure 2 est une vue en coupe seion II-II, montrant, en outre, schématiquement, les pinces de manutention;
la figure 3 est une vue en perspective éclatée, schématisant la pièce intermédiaire de l'invention, l'orifice inférieur de la boîte, les moyens de liaison solidaires de la plateforme du wagon et l'extrémité active de la pince de préhension;
la figure 4 est une vue en coupe en élévation d'un premier mode de réalisation d'une pièce intermédiaire, selon l'invention;
la figure 5 est une coupe selon V-V de la figure 4 montrant, en outre, schématiquement, les doigts d'actionnement du dispositif de verrouillage;
la figure 6 est une vue en coupe en élévation d'un deuxième mode de réalisation d'une pièce intermédiaire, selon l'invention, en coupe selon VI-VI de la figure 7;
la figure 7 est une vue en coupe selon VII-VII de la figure 6 montrant, en outre, schématiquement, le doigt d'actionnement du dispositif de verrouillage;
la figure 8 est une vue en élévation en coupe d'une autre variante de pièce intermédiaire, selon l'invention, comportant deux crochets de verrouillage pivotants;
la figure 9 est une vue en coupe en élévation d'une autre variante de pièce intermédiaire, selon l'invention, comportant deux verrous coulissants;
la figure 10 est une vue en élévation en coupe d'une autre variante d'une pièce intermédiaire, selon l'invention, comprenant deux pièces mobiles de verrouillage montées libres dans des logements respectifs;
et la figure 11 est une vue en coupe selon XI-XI de la figure 10.

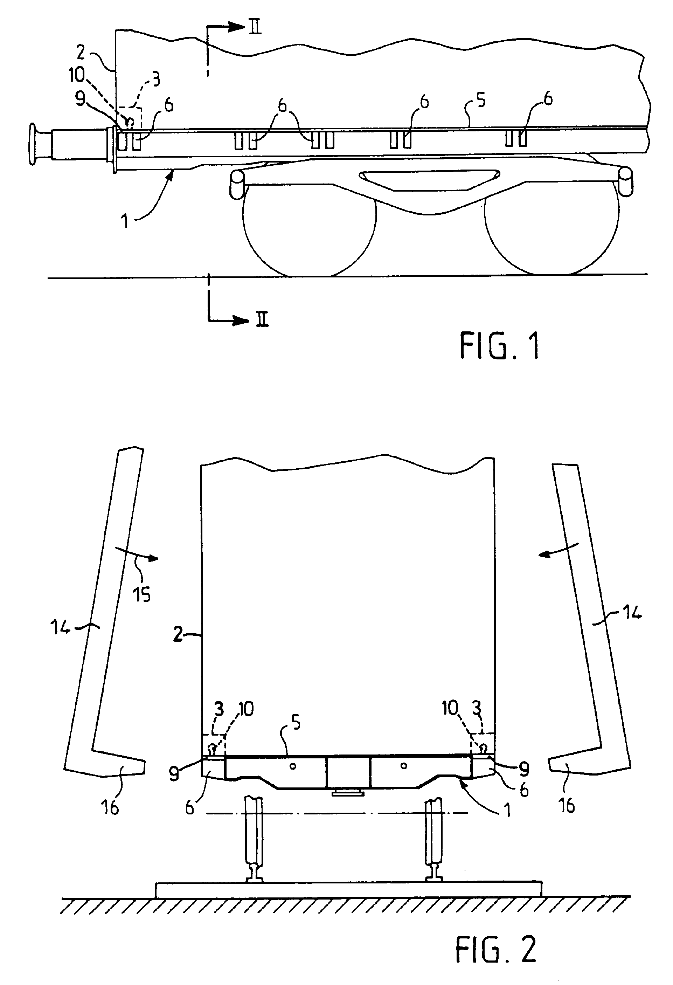

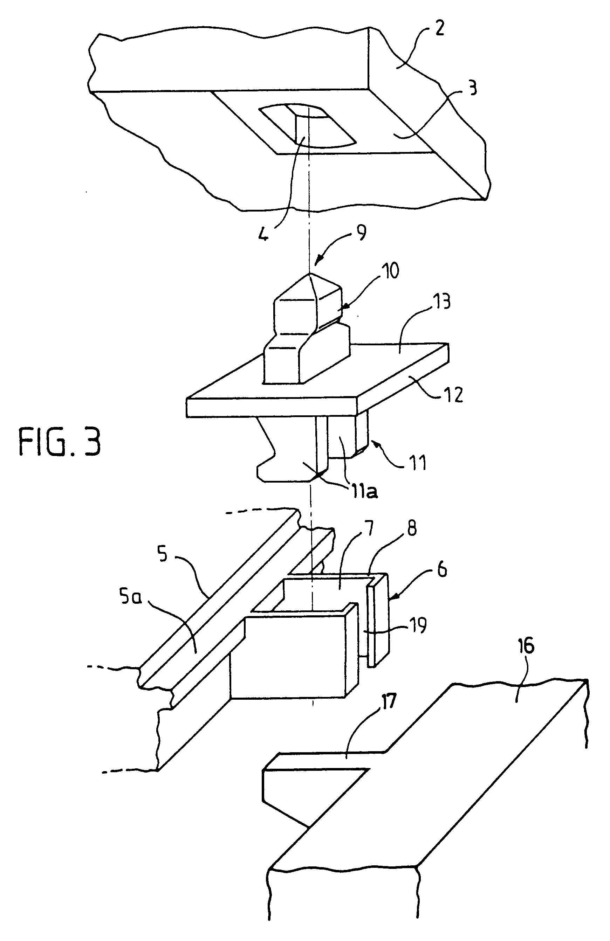

Dans l'exemple illustré sur les figures 1 à 3, l'invention est appliquée à la liaison et à la manutention de boîtes, illustrées ici sous la forme de conteneurs maritimes sur une plateforme de wagon de marchandises, référencé 1 dans son ensemble. La boîte 2 présente ici, dans ses coins inférieurs, des pièces de liaison 3 au voisinage des coins de la boîte et qui présentent une ouverture oblongue 4 visible sur la figure 3. La plateforme 5 du wagon 1 présente une surface horizontale plane, dont les bords longitudinaux peuvent comporter un décrochement 5a visible sur la figure 3. Le long de la bordure de plateforme 5, sont disposés une pluralité de boîtiers 6 définissant des ouvertures traversantes 7, la face frontale supérieure 8 des boîtiers 6 se trouvant au même niveau que le décrochement 5a, c'est-à-dire à un niveau inférieur à celui de la plateforme 5, comme on peut le voir le mieux sur la figure 3.

La pièce intermédiaire amovible de liaison et de manutention, selon l'invention, est référencée 9 dans son ensemble. Cette pièce comprend une partie supérieure 10 en saillie vers le haut et une partie inférieure 11 en saillie vers le bas munie de deux branches écartées 11a. Les parties supérieure 10 et inférieure 11 sont séparées par une semelle plane horizontale 12, dont l'épaisseur est égale à la valeur du décrochement entre le rebord 5a et la plateforme 5.

Le profil de la partie supérieure 10 est adapté à celui de l'ouverture oblongue 4 de la boîte 2. De la même manière, la partie inférieure 11 est telle qu'elle puisse aisément pénétrer dans le boîtier 6 par son ouverture 7, la face inférieure de la semelle 12 reposant alors sur la face frontale supérieure 8 du boîtier 6, ainsi que sur le rebord 5a de la plateforme 5. Dans cette position, qui est visible en particulier sur la figure 2, la face supérieure de la semelle 12 se trouve au même niveau que la plateforme 5. La boîte 2 peut donc reposer à la fois sur la plateforme 5 et sur la face supérieure des semelles 12 des différentes pièces intermédiaires qui assurent la liaison de la boîte 2 avec le wagon 1 pendant le transport de la boîte 2 sur la plateforme 5. Le profil de la partie supérieure 10 des différentes pièces intermédiaires 9 est tel que la liaison boîte/wagon soit suffisante pour répondre aux sollicitations diverses pendant la circulation du wagon.

Telle qu'elle est illustrée sur la figure 3, la semelle 12 présente, de chaque côté, des zones de bordure 13 qui sont d'une dimension suffisante pour déborder de chaque côté du boîtier 6, lorsque la pièce intermédiaire 9 est introduite dans ledit boîtier 6. Les zones de bordure 13 pourraient être utilisées pour le soulèvement par une pince de préhension 14 comportant deux branches de préhension écartées l'une de l'autre, pour pouvoir se loger de chaque côté du boîtier 6.

Dans l'exemple illustré sur la figure 3 cependant, la partie inférieure 16 des pinces 14 présente un seul doigt de préhension 17 qui vient se loger à travers la fente verticale 19 du boîtier 6 et prendre appui sur la face inférieure de la semelle 12, dans sa zone centrale entre les deux branches 11a.

Pour procéder à la manutention de la boîte 2, les pinces de préhension 14 visibles schématiquement sur la figure 2, pivotent dans le sens de la flèche 15 autour d'un axe supérieur non représenté sur la figure, afin que la partie inférieure 16 desdites pinces 14 puisse venir s'engager à l'endroit de chaque boîtier 6.

La pièce intermédiaire 9 est verrouillée par rapport au boîtier 6 par des moyens non illustrés sur la figure 3 et qui peuvent être montés à l'intérieur du boîtier 6. Les moyens de verrouillage peuvent être déverrouillés par action du doigt de préhension 17.

Dans un autre mode de réalisation, un doigt d'actionnement peut être sur la partie inférieure 16 des pinces 14, de façon à pouvoir être soumis à un mouvement de translation sous l'action d'un organe de commande, par exemple un vérin hydraulique. Le doigt d'actionnement peut passer sous le boîtier 6 pour actionner une ou plusieurs pièces mobiles de verrouillage qui peuvent être montées, soit sur le boîtier 6, soit sur la pièce intermédiaire 9 et qui assurent le verrouillage de la pièce intermédiaire 9 par rapport au boîtier 6.

Après déverrouillage des pièces intermédiaires 9, la boîte 2 peut être soulevée par les pinces 14, par l'intermédiaire des pièces 9. On prévoit généralement quatre, six ou huit pièces intermédiaires 9 pour une boîte 2, selon ses dimensions. Pour tenir compte des dimensions différentes des boîtes, en fonction notamment de leur type, qu'il s'agisse de conteneurs maritimes, de conteneurs terrestres, de caisses mobiles pour le transport routier ou de superstructures mobiles à gabarit ferroviaire, etc., on prévoit avantageusement sur le côté latéral de la plateforme 5 plusieurs boîtiers 6 à des emplacements qui permettent de poser sur le wagon 1 tous les types habituels de boîtes. Une telle disposition multiple est illustrée à titre d'exemple sur la figure 1.

Les différentes pièces intermédiaires 9 permettent ainsi, non seulement d'assurer la liaison entre les boîtes 2 et le wagon 1 pendant le transport ferroviaire, mais également d'assurer la préhension automatique des boîtes, qu'elles soient posées sur la plateforme 5 d'un wagon 1 ou sur un support approprié. Les pièces intermédiaires 9 permettent la manutention classique ou automatique des boîtes 2 et ce, quelles que soient leur taille et leur structure.

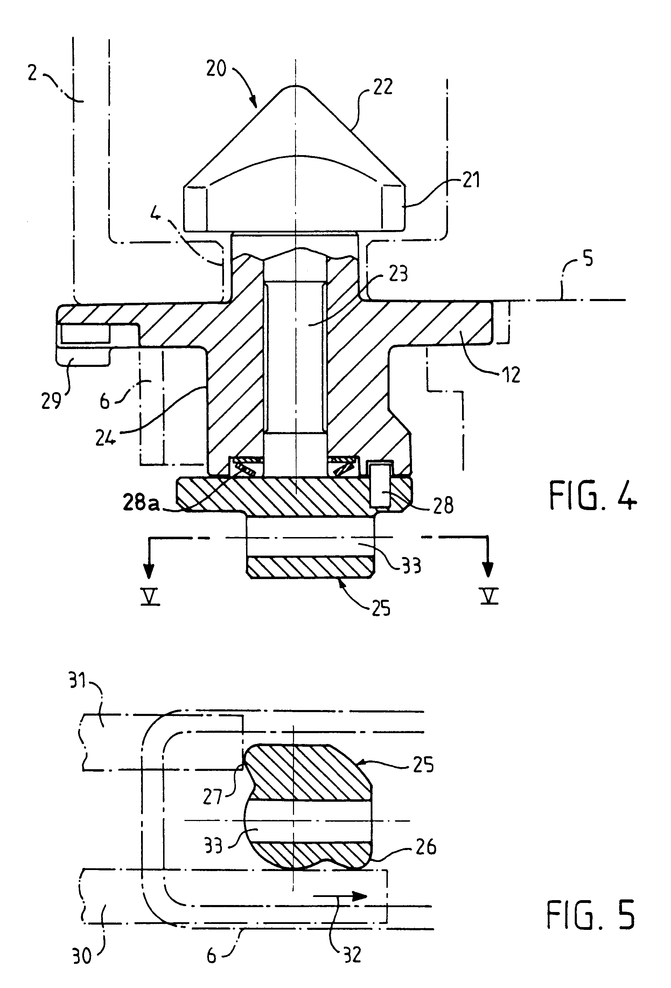

Un premier mode de réalisation d'une pièce intermédiaire, selon l'invention, est illustré sur les figures 4 et 5, sur laquelle les pièces identiques portent les mêmes références. Dans ce mode de réalisation, la pièce intermédiaire 20 présente à sa partie supérieure un verrou 21 pouvant tourner sur un quart de tour et présentant une partie supérieure conique 22 pour faciliter sa pénétration dans l'ouverture oblongue 4 de la boîte 2. Le verrou tournant 21 est monté sur un axe 23 qui traverse le corps 24 de la pièce intermédiaire 20, le corps 24 étant solidaire de la semelle horizontale 12. La commande de rotation du verrou tournant 21 se fait au moyen d'une pièce inférieure 25 qui présente deux surfaces de came latérales 26 et 27 en forme de bossage, qu'on peut voir sur la figure 5. La rotation de l'ensemble sur un quart de tour est limitée par le plot 28, un effet de freinage étant obtenu par la rondelle frein 28a.

Le bord extérieur de la semelle 12 comporte, en outre, à sa partie inférieure, un redan 29 qui peut coopérer avec un décrochement approprié pratiqué sur l'organe de préhension et de manutention, non illustré sur la figure, afin d'éviter tout glissement en charge.

La rotation d'un quart de tour du verrou 21 peut être effectuée de manière automatique par deux doigts d'actionnement 30 et 31, montés sur l'organe de préhension, non illustré sur la figure. Dans la position illustrée sur la figure 5, le doigt d'actionnement 30 est venu exercer une poussée sur la surface de came du bossage 26, dans le sens de la flèche 32, plaçant le verrou 21 dans la position illustrée sur la figure 4, pour laquelle la pièce intermédiaire 20 est rendue solidaire de la boîte 2.

Pour déverrouiller la pièce intermédiaire 20, on peut faire agir le doigt d'actionnement 31 qui vient pousser sur la surface de came 27, provoquant ainsi la rotation d'un quart de tour du verrou 21, ce qui autorise son passage par l'ouverture oblongue 4 de la boîte 2. On peut également procéder à la rotation manuelle de la pièce inférieure 25, en introduisant un outil approprié dans un passage traversant 33 pratiqué dans la pièce inférieure 25.

La manutention se fait, comme précédemment indiqué, par soulèvement de la boîte 2 par l'intermédiaire des semelles 12 des différentes pièces intermédiaires 20.

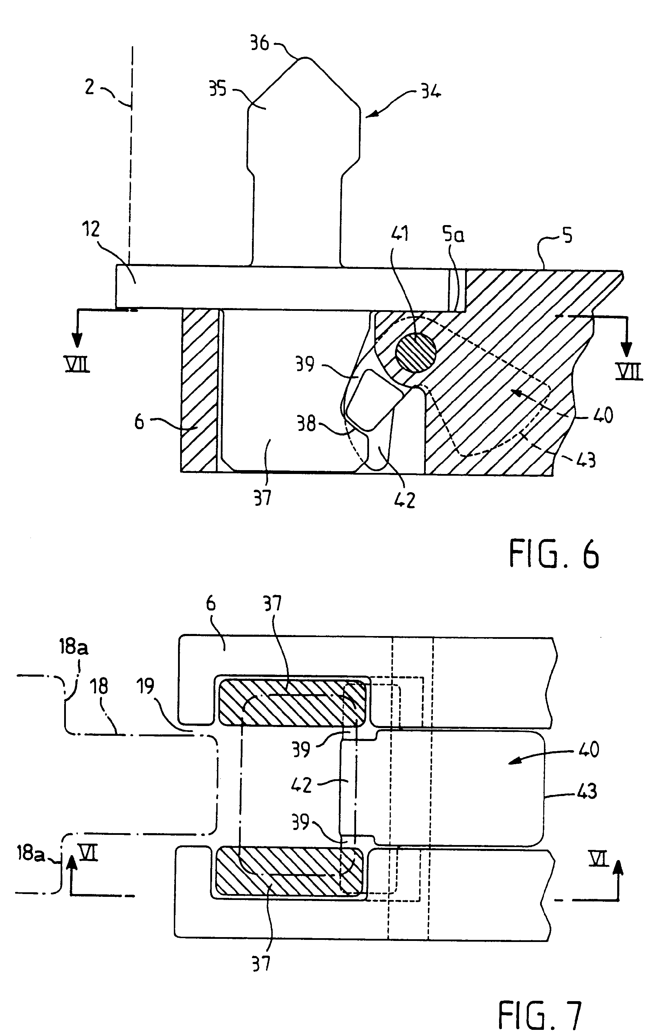

Dans le mode de réalisation illustré sur les figures 6 et 7, les pièces identiques portent les mêmes références. La pièce intermédiaire référencée 34 dans son ensemble, présente dans ce mode de réalisation, dans sa partie supérieure, une cheville 35 verticale, dont le profil est adapté pour pénétrer dans l'orifice oblong 4 de la boîte 2. La partie supérieure de la cheville 35 présente une forme conique 36 pour faciliter sa pénétration dans l'orifice 4. D'une manière générale, la forme de la cheville 35 est visible en perspective sur la figure 3. La partie supérieure de la cheville 35 est donc moins large que sa partie inférieure qui est adaptée à la forme de l'orifice 4.

La partie inférieure en saillie vers le bas de la pièce intermédiaire 34 formant une protubérance au-dessous de la semelle 2 comprend, dans ce mode de réalisation, deux branches verticales 37,37 écartées l'une de l'autre, comme on peut le voir sur la figure 7. Chacune des branches verticales présente une encoche de verrouillage 38 qui est destinée à coopérer avec une partie latérale 39 d'une pièce mobile 40 montée de façon à pivoter autour d'un axe 41, solidaire de la plateforme 5. La pièce mobile 40 présente entre ses deux parties latérales 39, une partie d'actionnement 42 de profil courbe. A l'opposé de cette partie d'actionnement 42 et des parties latérales 39, par rapport à l'axe 41, la pièce 40 présente un contrepoids 43, de façon telle que la pièce 40 se place toujours sous l'action de son propre poids dans la position de verrouillage illustrée sur les figures 6 et 7. Dans cette position, les deux portions latérales 39 coopèrent avec leur encoche de verrouillage 38 respective, de façon à empêcher toute extraction vers le haut de la pièce intermédiaire 34 qui reste donc bloquée dans le boîtier 6 solidaire de la plateforme 5.

Le déverrouillage peut se faire de manière manuelle ou de préférence automatique, par action du doigt d'actionnement 17 qui vient pénétrer dans la fente verticale 19 du boîtier 6, puis entre les deux branches latérales écartées 37 de la pièce intermédiaire 34, jusqu'à entrer en contact avec la partie d'actionnement 42 de la pièce 40, ce qui provoque le pivotement de la pièce mobile 40 et le dégagement des parties latérales de verrouillage 39. La manutention de la boîte 2 peut alors se faire comme précédemment, en venant prendre par en dessous la semelle horizontale 12, comme illustré sur la figure 3. Dans ce mode de réalisation, la pièce intermédiaire 34 vient simplement pénétrer sans verrouillage dans les orifices 4 de la boîte 2; elle peut au contraire être verrouillée par rapport à la plateforme 5.

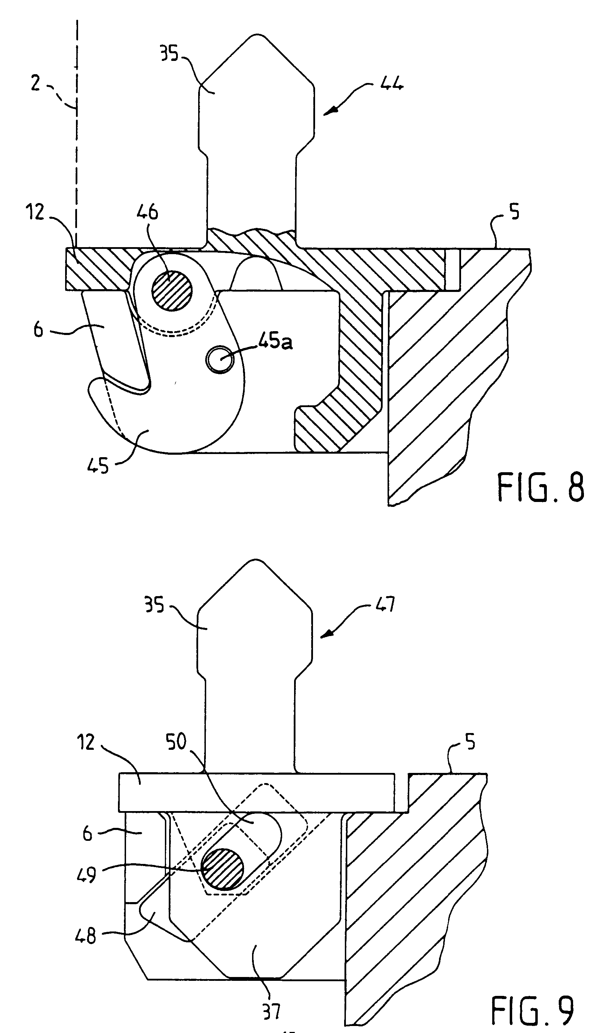

Dans le mode de réalisation illustré sur la figure 8, la pièce intermédiaire référencée 44 dans son ensemble présente la même structure que dans la variante des figures 6 et 7, en ce qui concerne la partie supérieure qui comporte également une cheville 35 de même forme et la semelle 12. Dans ce mode de réalisation, cependant, le verrouillage de la pièce intermédiaire 44 par rapport au boîtier 6 solidaire de la plateforme 5, se fait au moyen de deux crochets latéraux 45 écartés l'un de l'autre, comme c'était le cas pour les branches 37 du mode de réalisation des figures 6 et 7, de façon à laisser passer entre eux le doigt d'actionnement 17. Chaque crochet 45 peut pivoter autour d'un axe 46, solidaire de la pièce intermédiaire 44. Les crochets 45 viennent coopérer en vue du verrouillage avec la bordure inclinée de la paroi extérieure du boîtier 6. Un barreau transversal 45a solidaire des deux crochets 45, permet leur déverrouillage par l'action du doigt d'actionnement 17. Dans ce mode de réalisation, la pièce intermédiaire 44 peut donc, comme dans le cas précédent, être verrouillée sur le boîtier 6 solidaire de la plateforme 5. Dans ce mode de réalisation, cependant, l'élément mobile assurant le verrouillage et comprenant les deux crochets pivotant 45, est monté sur la pièce intermédiaire 44 et non plus sur le boîtier 6 ou la plateforme 5, comme dans le mode de réalisation des figures 6 et 7.

Dans le mode de réalisation de la figure 9, où les pièces identiques portent les mêmes références, la pièce intermédiaire 47 présente de manière générale la même structure que dans le mode de réalisation des figures 6 et 7. On y retrouve en particulier la cheville verticale supérieure 35, la semelle horizontale 12 et les branches latérales 37 écartées l'une de l'autre, pour permettre le passage du doigt d'actionnement 17, comme illustré sur la figure 7. Dans ce mode de réalisation, cependant, le verrouillage de la pièce intermédiaire 47 se fait au moyen de deux verrous coulissants 48, solidaires d'un axe transversal 49 qui peut se déplacer librement dans une lumière oblongue 50. Dans la position illustrée sur la figure 9, les verrous 48 empêchent toute extraction de la pièce intermédiaire 47, en coopérant avec la bordure inférieure du boîtier 6. Le déverrouillage peut être effectué par action sur l'axe transversal 49, sur lequel peut venir pousser le doigt d'actionnement 17, comme illustré sur la figure 7.

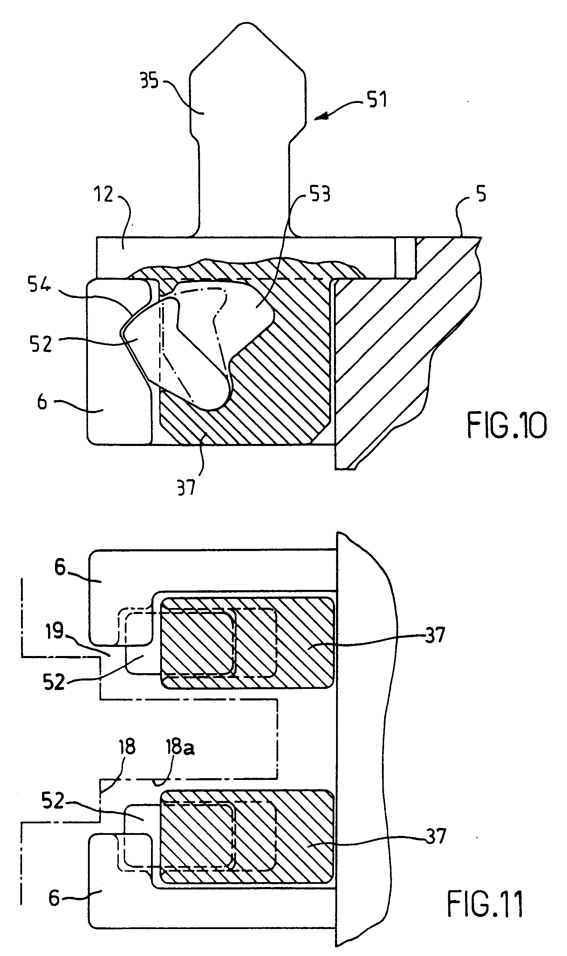

Dans le mode de réalisation illustré sur la figure 10, la pièce intermédiaire 51 présente la même structure générale que dans les modes de réalisation précédents, illustrés sur les figures 6 à 9, On y retrouve en particulier la cheville supérieure 35, la semelle horizontale 12 et les branches inférieures écartées 37. Dans ce mode de réalisation, le verrouillage de la pièce intermédiaire 51 se fait au moyen de deux pièces mobiles indépendantes, dont l'une 52 est visible sur la figure 10, chacune de ces pièces étant montée librement dans un logement 53 pratiqué dans la branche latérale respective 37. Chaque pièce mobile 52 est telle qu'elle puisse venir coopérer avec une encoche de verrouillage 54 pratiquée sur la surface intérieure du boîtier 6. La forme de la pièce mobile 52 est choisie de façon que ladite pièce 52 bascule sous l'action de son propre poids dans la position de verrouillage illustrée sur la figure 10. L'épaisseur des pièces 52 est telle qu'elles dépassent de la bordure 6 jusque dans la fente 19, comme on le voit sur la figure 11.

Pour procéder au déverrouillage, on agit par poussée sur chacune des pièces mobiles 52 au moyen d'un doigt d'actionnement 18 analogue au doigt d'actionnement 17 et présentant deux rebords latéraux 18a (visibles sur la figure 11) capables de pénétrer dans la fente 19 du boîtier et de venir en contact direct avec chaque pièce mobile 52, le doigt 18 pouvant se loger entre les branches 37.

Les pièces intermédiaires amovibles de liaison et de manutention de boîtes, qui viennent d'être décrites permettent, comme l'a vu, de servir d'appui aux boîtes par l'intermédiaire des pièces de coin inférieures pour les conteneurs ou par l'intermédiaire des pièces d'arrimage pour les caisses mobiles dont les écartements sont normalisés. Ces pièces intermédiaires permettent également de prendre appui sur les wagons, les appareils de transfert ou les zones de stockage. Les pièces intermédiaires de l'invention assurent en cours de transport le verrouillage vertical avec la boîte, soit au moyen d'une cheville fixe, soit au moyen d'un verrou tournant. La boîte se trouve ainsi maintenue par rapport au wagon au moyen de la pièce intermédiaire, laquelle est liée au wagon, soit par une cheville verticale inférieure fixe, soit au moyen de crochets ou de pièces mobiles.

On notera que les éléments mobiles assurant le verrouillage sont de préférence disposés sur le wagon lui-même de façon à simplifier la structure de la pièce intermédiaire.

Le déverrouillage de la pièce intermédiaire par rapport au wagon peut se faire de manière automatique lors de la manutention de la boîte par l'intermédiaire des pièces intermédiaires.

On peut également déverrouiller la pièce intermédiaire par rapport à la boîte lorsque cela est nécessaire, puis procéder à une manutention classique, par exemple par les coins supérieurs de la boîte, la pièce intermédiaire restant sur le wagon.

Il est facile, en augmentant légèrement les dimensions de la semelle horizontale, d'autoriser, si les moyens de manutention le nécessitent, le roulage des boîtes munies des pièces intermédiaires sur des tables à rouleaux.

Les pièces intermédiaires de l'invention peuvent être disposées dans des boîtiers préexistant sur les wagons, de sorte que le gabarit ferroviaire se trouve parfaitement respecté.

Enfin, les pièces intermédiaires amovibles de l'invention peuvent être aisément manipulées par un homme pour la prise ou la dépose sur le wagon, compte tenu de leur poids acceptable. Elles peuvent être en outre verrouillées et déverrouillées manuellement.

Les pièces intermédiaires de l'invention peuvent être avantageusement réalisées en fonte d'acier. Elles peuvent, en outre, comporter des moyens d'identification, par exemple par codes à barres, codes binaires, réalisés au moyen de trous ou d'encoches, étiquettes magnétiques à transmission inductive ou codification en clair, de façon à permettre la reconnaissance de la pièce intermédiaire et/ou de la boîte correspondante.

## Revendications

1. Pièce (9) intermédiaire amovible de liaison et de manutention de boîtes sur véhicule, comprenant une partie supérieure en saillie (10) adaptée pour coopérer avec un premier moyen de liaison (4) faisant partie de la boîte (2), une partie inférieure (11) adaptée pour coopérer avec un deuxième moyen de liaison (6) faisant partie du véhicule (5), caractérisée en ce qu'elle comporte une semelle plane horizontale (12) disposée entre les parties supérieure et inférieure, et adaptée pour coopérer par l'intermédiaire de sa face inférieure avec un organe de levage (11) pour la manutention de la boîte, la face supérieure de la semelle se trouvant au même niveau que la plateforme (5) du véhicule.

2. Pièce intermédiaire amovible selon la revendication 1, caractérisée par le fait que la partie supérieure en saillie (10) comprend une cheville verticale (35) dont le profil est adapté pour pénétrer dans un orifice (4) pratiqué au voisinage de la bordure de la boîte (2).

3. Pièce intermédiaire amovible selon la revendication 2, caractérisée par le fait que la cheville présente un profil oblong pour coopérer avec un orifice correspondant.

4. Pièce intermédiaire amovible selon les revendications 2 ou 3, caractérisée par le fait que la cheville est fixe.

5. Pièce intermédiaire amovible selon les revendications 2 ou 3, caractérisée par le fait que la cheville est montée en vue de sa rotation sur sensiblement un quart de tour par rapport à la semelle (12) en vue d'assurer un verrouillage de la pièce intermédiaire par rapport à la boîte.

6. Pièce intermédiaire amovible selon l'une quelconque des revendications précédentes, caractérisée par le fait que la partie inférieure (11) comprend une protubérance faisant saillie vers le bas capable de coopérer avec le véhicule en vue du verrouillage de la pièce intermédiaire sur le véhicule.

7. Pièce intermédiaire amovible selon la revendication 6, caractérisée par le fait que la protubérance (37) présente un profil (38) capable de coopérer, en vue de verrouillage de la pièce intermédiaire sur le véhicule, avec au moins une pièce mobile de verrouillage (40) montée sur le véhicule.

8. Pièce intermédiaire amovible selon la revendication 7, caractérisée par le fait que la protubérance de la pièce inférieure comprend deux branches (37) écartées l'une de l'autre présentant une encoche de verrouillage, l'écartement étant tel qu'un doigt d'actionnement (17) peut être déplacé entre les deux branches (37) pour provoquer une action de deverrouillage sur la pièce mobile montée sur le véhicule.

9. Pièce intermédiaire amovible selon la revendication 6, caractérisée par le fait que l'ensemble de la protubérance en saillie vers le bas peut tourner d'un quart de tour et présente un profil (26, 27) tel que la protubérance puisse, dans une position, traverser un orifice (4) pratiqué au voisinage de la bordure du véhicule et, dans une autre position, empêcher tout passage à travers ledit orifice, assurant ainsi le verrouillage de la pièce intermédiaire sur le véhicule.

10. Pièce intermédiaire amovible selon la revendication 6, caractérisée par le fait que la protubérance en saillie vers le bas comporte au moins une pièce mobile de verrouillage (45, 48, 52) capable de coopérer avec une encoche (6, 50, 54) pratiquée sur le véhicule.

11. Pièce intermédiaire amovible selon la revendication 10, caractérisée par le fait que la pièce mobile (45; 48; 52) est montée sur la pièce intermédiaire d'une manière telle qu'en l'absence de sollicitation, la pièce mobile (45; 48; 52) revienne par son propre poids en position de verrouillage.

12. Pièce intermédiaire amovible selon la revendication 11, caractérisée par le fait que la pièce mobile (45) est montée pivotante autour d'un axe (46) solidaire de la pièce intermédiaire (44).

13. Pièce intermédiaire amovible selon la revendication 11, caractérisée par le fait que la pièce mobile (48) est montée à coulissement dans une rainure inclinée (50).

14. Pièce intermédiaire amovible selon la revendication 11, caractérisée par le fait que la pièce mobile (52) est montée libre dans un logement (53) où elle peut basculer.

15. Pièce intermédiaire amovible selon la revendication 11, caractérisée par le fait que la protubérance comprend deux branches écartées l'une de l'autre, chacune comportant une pièce mobile de verrouillage (45).

16. Pièce intermédiaire amovible selon la revendication 11, caractérisée par le fait que la protubérance comprend en outre un organe d'actionnement (17; 18) relié à la ou les pièces mobiles de verrouillage et capable d'être poussé par un doigt d'actionnement. capable d'être poussé par un doigt d'actionnement.

17. Véhicule, notamment véhicule sur rails, destiné au transport de marchandises, comportant une plateforme de réception (5) de boîtes (2) munie de dispositifs de liaison pour lesdites boîtes, comprenant, sur la bordure de la plateforme, une pluralité de boîtiers (6) adaptés au passage et au logement des parties inférieures de pièces intermédiaire amovibles, caractérisé par le fait que les pièces intermédiaires amovibles sont conformes à l'une quelconque des revendications précédentes, ces boîtiers (6) étant placés de façon que la face supérieure des semelles (12) soit au même niveau que la face supérieure de la plateforme (5).

18. Véhicule selon la revendication 17, adapté à des pièces intermédiaires selon l'une quelconque des revendications 6 à 8, caractérisé par le fait que chaque boîtier (6) comprend au moins une pièce mobile de verrouillage (40) capable de coopérer avec une encoche (38) de la partie inférieure (37) de la pièce intermédiaire.

## Patentansprüche

1. Abnehmbares Zwischenstück (9) für die Verbindung und Handhabung von Transportbehältern auf Fahrzeugen, das einen oberen hervorstehenden Teil (10), der mit einer ersten, einen Teil des Transportbehälters (2) darstellenden Verbindungseinrichtung (4) zusammenwirken kann, und einen unteren Teil (11), der mit einer zweiten, einen Teil des Fahrzeugs (5) darstellenden Verbindungseinrichtung (6) zusammenwirken kann, umfaßt, dadurch gekenn- zeichnet, daß es eine ebene waagrechte Grundplatte (12) umfaßt, die zwischen dem oberen und unteren Teil angeordnet ist und über ihre Unterseite mit einem Hebeorgan (11) zur Handhabung des Transportbehälters zusammenwirken kann, wobei sich die Oberseite der Grundplatte auf gleicher Höhe mit der Plattform (5) des Fahrzeugs befindet.

2. Abnehmbares Zwischenstück nach Anspruch 1, dadurch gekennzeichnet, daß der hervorstehende obere Teil (10) einen vertikalen Zapfen (35) umfaßt, dessen Profil in eine in der Nähe des Randes des Transportbehälters (2) eingelassene Öffnung (4) eindringen kann.

3. Abnehmbares Zwischenstück nach Anspruch 2, dadurch gekennzeichnet, daß der Zapfen zum Zusammenwirken mit einer entsprechenden Öffnung ein längliches Profil hat.

4. Abnehmbares Zwischenstück nach Anspruch 2 oder 3, dadurch gekennzeichnet, daß der Zapfen ortsfest ist.

5. Abnehmbares Zwischenstück nach Anspruch 2 oder 3, dadurch gekennzeichnet, daß der Zapfen so montiert ist, daß er sich gegenüber der Grundplatte (12) um im wesentlichen eine Vierteldrehung drehen kann, so daß eine Verriegelung des Zwischenstücks mit dem Transportbehälter sichergestellt ist.

6. Abnehmbares Zwischenstück nach einem der vorhergehenden Ansprüche, dadurch gekennzeichnet, daß der untere Teil (11) einen Vorsprung umfaßt, der nach unten hervorsteht und zur Verriegelung des Zwischenstücks auf dem Fahrzeug mit dem Fahrzeug zusammenwirken kann.

7. Abnehmbares Zwischenstück nach Anspruch 6, dadurch gekennzeichnet, daß der Vorsprung (37) ein Profil (38) hat, das zur Verriegelung des Zwischenstücks auf dem Fahrzeug mit mindestens einem auf dem Fahrzeug montierten beweglichen Verriegelungsstück (40) zusammenwirken kann.

8. Abnehmbares Zwischenstück nach Anspruch 7, dadurch gekennzeichnet, daß der Vorsprung des unteren Teils zwei voneinander beabstandete, eine Verriegelungsraste bildende Zweige (37) umfaßt, wobei der Abstand so groß ist, daß ein Betätigungsfinger (17) zwischen den beiden Zweigen (37) bewegt werden kann, um an dem auf dem Fahrzeug montierten beweglichen Stück ein Entriegelungsvorgang auszulösen.

9. Abnehmbares Zwischenstück nach Anspruch 6, dadurch gekennzeichnet, daß der gesamte nach unten hervorstehende Vorsprung sich um eine Vierteldrehung drehen kann und ein solches Profil (26, 27) hat, daß der Vorsprung in einer Position durch eine in der Nähe des Randes des Fahrzeugs eingelassene Öffnung (4) gehen und in einer anderen Position den Durchgang durch jene Öffnung versperren kann, wodurch die Verriegelung des Zwischenstücks auf dem Fahrzeug sichergestellt ist.

10. Abnehmbares Zwischenstück nach Anspruch 6, dadurch gekennzeichnet, daß der nach unten hervorstehende Vorsprung mindestens ein bewegliches Verriegelungsstück (45, 48, 52) umfaßt, das mit einer im Fahrzeug eingelassenen Raste (6,50 54) zusammenwirken kann.

11. Abnehmbares Zwischenstück nach Anspruch 10, dadurch gekennzeichnet, daß das bewegliche Stück (45; 48; 52) derart auf dem Zwischenstück montiert ist, daß das bewegliche Stück (45; 48; 52) bei fehlendem Stimulus durch sein Eigengewicht in die Verriegelungsposition zurückkehrt.

12. Abnehmbares Zwischenstück nach Anspruch 11, dadurch gekennzeichnet, daß das bewegliche Stück (45) um eine mit dem Zwischenstück (44) fest verbundene Achse (46) schwenkbar ist.

13. Abnehmbares Zwischenstück nach Anspruch 11, dadurch gekennzeichnet, daß das bewegliche Stück (48) so montiert ist, daß es in einer geneigten Nut (50) gleiten kann.

14. Abnehmbares Zwischenstück nach Anspruch 11, dadurch gekennzeichnet, daß das bewegliche Stück (52) frei beweglich in einer Aufnahme (53) montiert ist, wo es kippen kann.

15. Abnehmbares Zwischenstück nach Anspruch 11, dadurch gekennzeichnet, daß der Vorsprung zwei voneinander beabstandete Zweige umfaßt, die jeweils ein bewegliches Verriegelungsstück (45) umfassen.

16. Abnehmbares Zwischenstück nach Anspruch 11, dadurch gekennzeichnet, daß der Vorsprung des weiteren ein Betätigungsglied (17; 18) umfaßt, das mit dem oder den beweglichen Verriegelungsstücken verbunden ist und durch einen Betätigungsfinger geschoben werden kann.

17. Fahrzeug, insbesondere Schienenfahrzeug, das für den Transport von Gütern bestimmt ist und eine Aufnahmeplattform (5) für Transportbehälter (2) mit Verbindungsvorrichtungen für jene Transportbehälter umfaßt und das am Rand der Plattform eine Vielzahl von Gehäusen (6) aufweist, in die sich untere Teile von abnehmbaren Zwischenstücken hineinbewegen können und darin Aufnahme finden, dadurch gekennzeichnet, daß die abnehmbaren Zwischenstücke einem der vorhergehenden Ansprüche entsprechen, wobei diese Gehäuse (6) so angeordnet sind, daß sich die Oberseite der Grundplatten (12) auf gleicher Höhe mit der Oberseite der Plattform (5) befindet.

18. Fahrzeug nach Anspruch 17, das für Zwischenstücke nach einem der Ansprüche 6 bis 8 ausgelegt ist, dadurch gekennzeichnet, daß jedes Gehäuse (6) mindestens ein bewegliches Verriegelungsstück (40) umfaßt, das mit einer Raste (38) des unteren Teils (37) des Zwischenstücks zusammenwirken kann.

## Claims

1. Removable intermediate piece (9) for connecting crates to and handling crates on vehicles, comprising an upper projecting part (10) adapted to interact with a first connection means (4) forming part of the crate (2), a lower part (11) adapted to interact with a second connection means (6) forming part of the vehicle (5), characterized in that it includes a horizontal planar sole plate (12) located between the upper and lower parts, and which is adapted to interact through the use of its lower face, with a lifting member (11) for handling the crate, the upper face of the sole plate being situated at the same level as the platform (5) of the vehicle.

2. Removable intermediate piece according to Claim 1, characterized in that the upper projecting part (10) comprises a vertical pin (35) the profile of which is adapted to penetrate into a hole (4) made in the vicinity of the edge of the crate (2).

3. Removable intermediate piece according to Claim 2, characterized in that the pin has an oblong profile to interact with a corresponding hole.

4. Removable intermediate piece according to Claims 2 or 3, characterized in that the pin is fixed.

5. Removable intermediate piece according to Claims 2 or 3, characterized in that the pin is mounted for the purpose of rotating through substantially a quarter of a turn with respect to the sole plate (12) for the purpose of locking the intermediate piece with respect to the crate.

6. Removable intermediate piece according to any one of the preceding claims, characterized in that the lower part (11) comprises a protuberance projecting downward and capable of interacting with the vehicle for the purpose of locking the intermediate piece to the vehicle.

7. Removable intermediate piece according to Claim 6, characterized in that the protuberance (37) has a profile (38) capable of interacting, for the purpose of locking the intermediate piece to the vehicle, with at least one movable locking piece (40) mounted on the vehicle.

8. Removable intermediate piece according to Claim 7, characterized in that the protuberance of the lower piece comprises two branches (37) spaced apart from one another and exhibiting a locking recess, the spacing being such that an actuating finger (17) can be moved between the two branches (37) to bring about an unlocking action on the movable piece mounted on the vehicle.

9. Removable intermediate piece according to Claim 6, characterized in that the whole of the downward projecting protuberance can rotate through a quarter of a turn and has a profile (26, 27) such that the protuberance can, in one position, pass through a hole (4) made in the vicinity of the edge of the vehicle and, in another position, prevent any passage through the said hole, thus locking the intermediate piece to the vehicle.

10. Removable intermediate piece according to Claim 6, characterized in that the downward projecting protuberance includes at least one movable locking piece (45, 48, 52) capable of interacting with a recess (6, 50, 54) made in the vehicle.

11. Removable intermediate piece according to Claim 10, characterized in that the movable piece (45; 48; 52) is mounted on the intermediate piece such that in the absence of any urging, the movable piece (45; 48; 52) returns to the locking position under its own weight.

12. Removable intermediate piece according to Claim 11, characterized in that the movable piece (45) is mounted so that it can pivot about a pin (46) secured to the intermediate piece (44).

13. Removable intermediate piece according to Claim 11, characterized in that the movable piece (48) is mounted so that it can slide in an inclined groove (50).

14. Removable intermediate piece according to Claim 11, characterized in that the movable piece (52) is mounted so that it is free in a housing (53) in which it can tilt.

15. Removable intermediate piece according to Claim 11, characterized in that the protuberance comprises two branches spaced apart from one another, each branch including a movable locking piece (45).

16. Removable intermediate piece according to Claim 11, characterized in that the protuberance furthermore comprises an actuating member (17; 18) joined to the movable locking piece or pieces and capable of being pushed by an actuating finger.

17. Vehicle, particularly a vehicle on rails, intended for the transportation of goods, including a platform (5) for receiving crates (2) equipped with connection devices for the said crates, comprising, on the edge of the platform, a plurality of casings (6) adapted for the passage and housing of the lower parts of removable intermediate pieces, characterized in that the removable intermediate pieces are in accordance with any one of the preceding claims, these casings (6) being placed so that the upper face of the sole plates (12) is at the same level as the upper face of the platform (5).

18. Vehicle according to Claim 17, adapted for intermediate pieces according to any one of Claims 6 to 8, characterized in that each casing (6) comprises at least one movable locking piece (40) capable of interacting with a recess (38) in the lower part (37) of the intermediate piece.
